## Europäisches Patentamt
## European Patent Office
## Office européen des brevets

(19)

(11) Veröffentlichungsnummer : **0 332 886 B1**

(12) **EUROPÄISCHE PATENTSCHRIFT**

(45) Veröffentlichungstag der Patentschrift :
29.07.92 Patentblatt 92/31

(51) Int. Cl.⁵ : **B24C 11/00**

(21) Anmeldenummer : **89102985.2**

(22) Anmeldetag : **21.02.89**

(54) **Strahlmittel aus thermoplastischem Kunststoff.**

(30) Priorität : **12.03.88 DE 8803364 U**

(43) Veröffentlichungstag der Anmeldung :
**20.09.89 Patentblatt 89/38**

(45) Bekanntmachung des Hinweises auf die
Patenterteilung :
**29.07.92 Patentblatt 92/31**

(84) Benannte Vertragsstaaten :
**CH DE ES FR GB IT LI SE**

(56) Entgegenhaltungen :
**DE-A- 3 245 099**
**DE-A- 3 408 828**
**DE-B- 1 050 682**
**GB-A- 1 086 470**
**US-A- 3 313 067**
**PATENT ABSTRACTS OF JAPAN, Band 8, Nr.**
**249 (M-338)[1686], 15. November 1984; & JP-**
**A-59 124 572 (TOSHIBA K.K.) 18-07-1984**

(73) Patentinhaber : **Bloch, Klaus**
**Schwalbenweg 17**
**W-5205 St. Augustin 1 (DE)**

(72) Erfinder : **Bloch, Klaus**
**Schwalbenweg 17**
**W-5205 St. Augustin 1 (DE)**
Erfinder : **Weber, Josef**
**Ringstrasse 63**
**W 5205 Hennef-Stossdorf (DE)**
Erfinder : **Glörfeld, Hermann**
**Inm Weiler 18**
**W-5870 Hemer (DE)**
Erfinder : **Postelt, Peter**
**Am Marksbach 36**
**W-4600 Dortmund 30 (DE)**

(74) Vertreter : **Müller-Gerbes, Margot**
**Friedrich-Breuer-Strasse 112**
**W-5300 Bonn 3 (Beuel) (DE)**

EP 0 332 886 B1

## Beschreibung

Die Erfindung betrifft ein Strahlmittel in Form eines prismatischen Körpers mit fünfeckigem Querschnitt auf Basis thermoplastischer Kunststoffe zum Entgraten, Reinigen oder Mattieren von Artikeln mittels Strahlverfahren, wie Schleuderrad- oder Druckluftstrahlverfahren.

Seit langem sind Strahlmittel in Form zylindrischer Körner, die aus hochwertigen Drähten aller Arten von Metallen gefertigt werden, und bei denen die Kornlänge dem Drahtdurchmesser entspricht, zum Reinigungsstrahlen, zum Gußputzen, Entrosten, Entzundern vorwiegend metallischer Oberflächen bekannt. Das Strahlen wird dabei in geschlossenen Schleuderradanlagen weitgehend automatisch und ohne Staubentwicklung durchgeführt. Andere bekannte Strahlmittel sind Korunde, Glasstrahlmittel, Schlacken oder organische und keramische Strahlmittel, bei denen die Strahlmittel eine unregelmäßige Form und auch unterschiedliche Korngrößen aufweisen.

Für die Oberflächenbearbeitung von Kunststoffen und die Feinbearbeitung von metallischen Oberflächen sind Strahlmittel auf Basis von Kunststoffen entwickelt worden. Hier ist zwischen harten Kunststoffen, wie Duroplasten und elastischen Kunststoffen, beispielsweise Kautschuken, Gummi oder dergleichen zu unterscheiden. Während das Strahlen von beispielsweise Spritzgußartikeln aus Duroplasten zum Entgraten bei Raumtemperatur erfolgt, ist für das Strahlen und Oberflächenbearbeiten von Artikeln aus elastischen Kunststoffen das sogenannte kryogene Strahlen bei tiefen Temperaturen bis minus 190°C, bei denen die Artikel tiefgefroren werden, entwickelt worden. Entsprechend müssen auch die dann verwendeten Strahlmittel bei tiefen Temperaturen funktionstüchtig sein.

Für die verschiedenen Strahlprozesse und unterschiedlichen Materialien, die zu bearbeiten sind, sind eine Reihe von Strahlmitteln auf Kunststoffbasis entwickelt worden. Zum einen werden gemahlene Körner auf Basis von Duroplasten, wie Harnstoff oder Armin, angeboten, die jedoch aufgrund ihrer unregelmäßigen und unterschiedlichen Körnermischung nur ein beschränktes Einsatzgebiet haben und sich beispielsweise nicht für ein qualitativ hochwertiges Entgraten komplizierter Spritzgußteile kleiner Dimensionen eignen.

Ein Strahlmittel aus kleinen sphärischen Kügelchen aus Polystyrol mit Durchmessern unter 1 mm eignet sich zum sanften Abgraten sehr empfindlicher und zerbrechlicher Artikel, beispielsweise Spritzgußteilchen aus Kunststoff, die in der Elektronikindustrie benötigt werden. Strahlmittel auf Basis thermoplastischer Kunststoffe, wie Polyamide und Polycarbonate, die aus extrudierten Drähten als zylindrische Körper abgelängt werden, eignen sich für vielfältige Aufgaben des Entgratens und Reinigens von Oberflächen von Artikeln sowohl aus Kunststoffen als auch aus Metallen sowohl bei Raumtemperatur als auch für das kryogene Strahlen bei tiefen Temperaturen. Man hat nun bereits festgestellt, daß bei Ausbildung des Strahlmittels in Form eines Kubus mit gleicher Raumdiagonale und aus dem gleichen Material dieses 27 % mehr Masse und damit 27 % mehr kinetische Energie als ein Zylinderkorn oder ein gemahlenes Korn aufweisen. Dadurch, daß der Kubus auch gegenüber dem Zylinder achtmal mehr Ecken und zehnmal mehr Kanten aufweist, ist er entgratungswirksamer als zylindrische Strahlmittel.

Es sind auch bereits prismatische Kunststoffkörper sowohl in Zylinderform als auch mit polygonalem Querschnitt aus der DE-A-3408828, die den nächsthegenden stand der Technik darstellt, bekannt, bei denen die Kanten scharfkantig zum Erzielen einer hohen Schabwirkung ausgebildet sind. Auch unregelmäßig geformte vieleckige Körper aus Duroplasten mit scharfen Kanten und Ecken sind nach der Jp-A-59 124572 als Strahlmittel vorgeschlagen worden. Diese mit scharfen Kanten und Ecken ausgebildeten Strahlmittel haben jedoch den Nachteil, daß die Kanten und Ecken schnell abstumpfen und somit die Wirksamkeit des Strahlmittels nachläßt und eine gleichmäßige Entgratungswirkung nicht aufrechterhalten werden kann. Des weiteren besteht die Gefahr, daß bei empfindlichen mit dem Strahlmittel mit scharfen Kanten zu bearbeitenden Artikeln diese durch die scharfen Kanten beschädigt werden.

Der Erfindung liegt die Aufgabe zugrunde, ein Strahlmittel auf Basis thermoplastischer Kunststoffe zu schaffen, das gegenüber den bekannten Strahlmitteln eine weiter verbesserte effektive Entgratung, ohne die Oberfläche der zu strahlenden Artikel zu zerstören, ermöglicht.

Diese Aufgabe wird erfindungsgemäß dadurch gelöst, daß das Strahlmittel aus einem extrudierten und im Verhältnis bis zu etwa 1:8 gereckten Profilstrang aus dem thermoplastischen Kunststoff mit dem Querschnitt eines regelmäßigen Fünfeckes durch Ablängen in Form eines geraden regelmäßigen fünfseitigen Prismas hergestellt ist, wobei die Kanten der Seitenflächen des Prismas leicht abgerundet sind und die Länge des Prismas gleich, etwas kleiner oder etwas gröber als dem maximalen Durchmesser des Prismas von etwa 0,4 bis 3mm, bevorzugt 1 bis 3 mm, entspricht, ausgebildet ist. Ein Prisma ist ein Körper, der von zwei kongruenten Polygonen, hier Fünfecken, die in parallelen Ebenen liegen, als Grundfläche und Deckfläche und von Parallelogrammen als Seitenflächen begrenzt wird. Wenn die Seitenflächen des Körpers senkrecht zur Grundfläche stehen, so heißt der Körper gerades Prisma. Bevorzugt werden solche geraden Prismen eingesetzt. Die gewählte Form des erfindungsgemäßen fünfseitigen Prismas als Strahlmittel hat gegenüber dem bekannten Wür-

2

fel den Vorteil, daß sowohl die Anzahl der Flächen, die Anzahl der Kanten als auch die Anzahl der Ecken vergröbert ist, und zwar die Anzahl der Flächen von sechs auf sieben, die Anzahl der Kanten von zwölf auf fünfzehn und die Anzahl der Ecken von acht auf zehn. Damit wird die Wahrscheinlichkeit des Aufprallens des Strahlmittels auf die zu bearbeitenden Artikel und die abzutragenden Teile, wie Grate, entsprechend erhöht und ebenfalls eine Leistungssteigerung beim Entgraten erreicht. Aufgrund der größeren Winkel an den Ecken und Kanten wird auch mehr kinetische Energie übertragen, gleichzeitig aber das ggf. unerwünschte Markieren der Oberfläche des zu bearbeitenden Artikels durch zu scharfe Kanten vermieden.

Ist die Grundfläche eines geraden Prismas von einem regelmäßigen n-Eck gebildet, so wird es als regelmäßiges n-seitiges Prisma bezeichnet. Gemäß der Erfindung wird als Form des Strahlmittels ein gerades regelmäßiges fünfseitiges Prisma ausgewählt. Ein solches Prisma ist durch Extrusion einfach herstellbar. Qualitativ hochwertige Strahlmittel gemäß der Erfindung werden dadurch erhalten, daß sie aus einem extrudierten und im Verhältnis bis zu etwa 1:8 gereckten Profilstrang aus thermoplastischem Kunststoff mit dem Querschnitt eines Fünfeckes durch Ablängen hergestellt sind. Insbesondere eignen sich thermoplastische Kunststoffe auf Basis von Polyamiden oder Polycarbonaten für die Anwendung bei der Erfindung. Es sind jedoch auch Blends aus solchen thermoplastischen Kunststoffen mit anderen Thermoplasten möglich. Strahlmittel auf Basis von Polyamiden, wie Polyamid 6.6 oder Polyamid 12 oder Polyamid 11, eignen sich neben Polycarbonaten insbesondere auch für den Einsatz beim kryogenen Strahlen.

Die erfindungsgemäßen Strahlmittel können mit einem maximalen Durchmesser des Fünfeckes von 0,4 bis 3 mm gefertigt sein, bevorzugt werden jedoch maximale Durchmesser des Fünfecks von etwa 1 bis 3 mm. Die Länge des Prismas als Strahlmittel kann gleich, etwas kleiner oder etwas gröber als der maximale Durchmesser, wie vorangehend definiert, gewählt sein.

Die erfindungsgemäß vorgeschlagene Form für Strahlmittel auf Basis thermoplastischer Kunststoffe hat den Vorteil, daß sie sich durch die Möglichkeit der gleichmäßigen Formgebung auszeichnet, so daß eine homogene Kornmischung aus Körnern in Prismaform gleicher Größe und Gestalt herstellbar ist. Mit einer solchen homogenen Kornmischung kann das Strahlverfahren entsprechend dosiert angewendet werden, um ein gleichmäßiges Strahlen auch bei automatischen Fertigungsprozessen zu gewährleisten. Eine hohe Dimensionsgenauigkeit der Form des Strahlmittels kann sowohl durch die gewählte Form als auch durch den Herstellungsprozeß gewährleistet werden. Dimensionsgenauigkeit und Qualität des erfindungsgemäßen Strahlmittels ermöglichen gleichbleibende und reproduzierbare Strahlergebnisse. Anwendungsgebiete für die erfindungsgemäßen Strahlmittel sind beispielsweise das Entgraten von Spritzgußartikeln aus Duroplasten, das Bearbeiten und Entgraten von Nicht-Eisen-Metallegierungen und Sinterteilen und das Entgraten durch kryogenes Strahlen bei tiefen Temperaturen von Artikeln aus Gummi, Silikon-Kautschuken oder dergleichen.

Die Erfindung ist in der Zeichnung an einem Ausführungsbeispiel dargestellt.

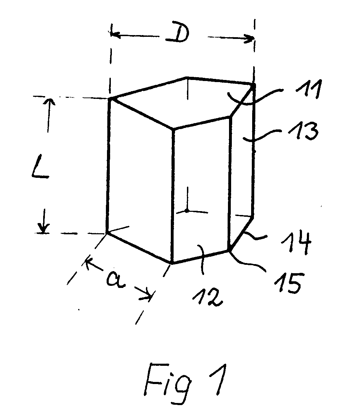

Figur 1 zeigt schematisch das Strahlmittel in Gestalt eines geraden fünfseitigen Prismas.

Das Prisma weist die zueinander parallele und kongruente Deckfläche 11 und Grundfläche 12 aus einem regelmäßigen Fünfeck mit der Kantenlänge a auf. Der maximale Durchmesser D des Prismas ist aus dem maximalen Durchmesser des Fünfecks abgeleitet. Die Seitenflächen des Prismas werden von Parallelogrammen 13 gebildet, die beiß geraden Prisma Rechtecke sind, deren Seitenlänge der Länge L des Prismas entspricht. Die Länge L des Prismas kann gleich dem maximalen Durchmesser D sein, sie kann aber auch kleiner gewählt sein, beispielsweise entsprechend der Kantenlänge a der Grundfläche, so daß die Seitenflächen des Prismas Quadrate bilden. Das Prisma als Strahlmittel weist zehn Ecken 15 auf und fünfzehn Kanten 14. Durch seine kleine kompakte Form ist es als Geschob mit den vielen Flächen, Ecken und Kanten hervorragend als Strahlmittel auch zum Abgraten des Grates diffiziler Spritzgußteile geeignet.

## Patentansprüche

1. Strahlmittel in Form eines prismatischen Körpers mit fünfeckigem Querschnitt auf Basis thermoplastischer Kunststoffe zum Entgraten, Reinigen oder Mattieren von Artikeln mittels Strahlverfahren, wie Schleuderrad- oder Druckluftstrahlverfahren, **dadurch gekennzeichnet,** daß es aus einem extrudierten und im Verhältnis bis zu etwa 1:8 gereckten Profilstrang aus dem thermoplastischen Kunststoff mit dem Querschnitt eines regelmäßigen Fünfeckes durch Ablängen in Form eines geraden regelmäßigen fünfseitigen Prismas hergestellt ist, wobei die Kanten der Seitenflächen des Prismas leicht abgerundet sind und die Länge (L) des Prismas gleich, etwas kleiner oder etwas gröber als dem maximalen Durchmesser (D) des Prismas von etwa 0,4 bis 3mm, bevorzugt 1 bis 3 mm, entspricht, ausgebildet ist.

2. Strahlmittel nach Anspruch 1, **dadurch gekennzeichnet,** daß das Prisma auf Basis eines Polyamides oder Polycarbonates gefertigt ist.

## Claims

1. An abrasive blasting material in the form of a prismatic body with a pentagonal cross-section and based on thermoplastic plastics, for deburring, cleaning or dulling articles by means of blasting methods such as fan blower blasting or compressed air blasting, **characterised in that** it is produced from an extruded profile of thermoplastic plastics with the cross-section of a regular pentagonal prism, stretched in the ratio of up to approx. 1:8, by cutting into sections in the form of a regular pentagonal right prism, wherein the edges of the lateral faces of the prism are slightly rounded and the length (L) of the prism is identical, slightly smaller or slightly larger than the maximum diameter (D) of the prism of approx. 0.4 to 3 mm, preferably 1 to 3 mm.

2. An abrasive blasting material according to claim 1, **characterised in that** the prism is produced, based on a polyamide or polycarbonate.

## Revendications

1. Matériau de grenaillage en forme de corps prismatique de section pentagonale sur la base de matières thermoplastiques pour l'ébavurage, le nettoyage ou la mise au mat d'articles au moyen de procédés de grenaillage tels que le grenaillage à turbine ou à air comprimé, **caractérisé par le fait qu'**il est fabriqué à partir d'un profilé extrudé en matière thermoplastique, étiré avec un rapport jusqu'à environ 1 à 8, avec la section d'un pentagone régulier, par tronçonnage sous forme d'un prisme pentagonal régulier droit, les arêtes des faces latérales du prisme étant légèrement arrondies et la longueur (L) du prisme étant égale, légèrement inférieure ou légèrement supérieure au diamètre maximal (D) du prisme qui est d'environ 0,4 à 3 mm, de préférence de 1 à 3 mm.

2. Matériau de grenaillage selon la revendication 1, **caractérisé par le fait que** le prisme est fabriqué sur la base d'un polyamide ou d'un polycarbonate.

Fig 1